# EUROPEAN PATENT APPLICATION

(11) **EP 2 607 322 A1**
(43) Date of publication of application: **26.06.2013**
(21) Application number: 11306714.4
(22) Date of filing: 21.12.2011
(51) Int. Cl.: C02F 1/52, C08J 11/02, C02F 101/30, C02F 101/36, C02F 103/38

(54) **Method for the treatment of wastewater**

(71) Applicant: SOLVAY SA, 1120 Bruxelles (BE)
(72) Inventor: Breton, Claude, 29660 CARANTEC (FR); Chau, Thoi-Dai, 53545 OCKENFELS (DE); Savary, David, 54110 Dombasle-sur-Meurthe (FR); Bobet, Josselin, 39120 Balaiseaux (FR); Grossjean, Francis, 54110 DOMBASLE-SUR-MEURTHE (FR)
(74) Representative: Benvenuti, Federica

(57) **Abstract**

A method is disclosed for the treatment of wastewater deriving from the manufacturing process of halogenated vinyl polymers, in particular vinylidene chloride polymers. The method comprises sequentially adding to the wastewater at least one water soluble carbonate, preferably sodium carbonate, and at least one water soluble calcium salt to form a solid precipitate and separating water from the solid precipitate.

## Description

### Technical Field

The invention relates to a process for the treatment of wastewater deriving from the industrial production process of halogenated vinyl polymers.

### Background Art

Polymers deriving from halogenated vinyl monomers are prepared on an industrial scale by means of dispersed phase polymerization processes, commonly using water as the dispersing phase. Non-limiting examples of typical dispersed phase polymerization processes are emulsion and suspension polymerization processes.

The wastewater from the polymerization process, once the solid polymer has been recovered, requires further treatment before discharge in order to reduce the contaminants still dissolved or suspended therein. These contaminants may typically include surfactants, emulsifiers and/or suspending agents used in the polymerization process, by-products of the radical polymerization initiator, unreacted monomers, low molecular weight oligomers deriving from the halogenated vinyl monomers, polymer particles, pH regulators. Typical industrial wastewater treatment consists of two steps: coagulation and flocculation. Typical coagulant agents are salts of divalent or trivalent cations, such as calcium, aluminium or iron salts. Flocculent agents typically used are water soluble organic polymers, such as polyacrylamide and polyacrylate type polymers.

### Summary of invention

It has now been found that the amount of contaminants suspended in the wastewater deriving from the dispersed phase polymerization of halogenated vinyl monomers can be effectively reduced by a wastewater treatment comprising sequentially adding to said wastewater a water soluble carbonate and a water soluble calcium salt. Said addition promotes the formation of a solid precipitate which can be separated from the water by means of conventional liquid/solid separation methods. The treatment is particularly effective in promoting the quick settling of the precipitate, as well as a high reduction of suspended contaminants in the wastewater.

### Description of invention

Object of the present invention is thus a method for the treatment of wastewater deriving from the manufacture of halogenated vinyl polymers, said method comprising:
a) sequentially adding to said wastewater at least one water soluble carbonate and at least one water soluble calcium salt to form a solid precipitate; and
b) separating water from said solid precipitate.

The inventive method is suitable for the treatment of wastewater deriving from the manufacture of halogenated vinyl polymers. The term "wastewater" is used in the present specification to collectively identify any water used at any stage of the halogenated vinyl polymer manufacturing process. Any water that has entered in contact with the halogenated vinyl monomer and/or polymer during the manufacturing process is a "wastewater" according to the present specification.

Halogenated vinyl polymers are typically prepared by an aqueous dispersion radical polymerization process, see for instance "Poly(vinyl chloride)", "Poly(vinylidene chloride)" and "Fluoropolymers, organic" in Wiley VCH-Verlag**.** Ullmann's Encyclopedia of Industrial Chemistry. Edited by WILEY. Weinheim: Wiley VCH-Verlag, 2005.

The expression "aqueous dispersion radical polymerization process" is intended to denote aqueous emulsion radical polymerization and aqueous suspension radical polymerization processes.

The expression "aqueous emulsion radical polymerization process" is intended to denote any radical polymerization process which is carried out in an aqueous medium in the presence of emulsifying agents and radical initiators which are soluble in water.

The expression "aqueous suspension polymerization process" is intended to denote any radical polymerization process in which oil-soluble initiators are employed and an emulsion of droplets of monomers is produced by virtue of powerful mechanical stirring and the presence of emulsifying or suspension agents.

At the end of the polymerization process the halogenated vinyl polymer may be recovered in solid form from the aqueous phase by common filtration, precipitation or coagulation techniques, optionally washed, and dried.

Alternatively, should the halogenated vinyl polymer be prepared by an emulsion polymerization process, the obtained latex, after purification and/or optional concentration steps may be used as a liquid composition. Purification of the latex of any unreacted monomer may be for instance carried out by injecting steam into the latex, followed by distillation of a water/monomer mixture under vacuum.

Regardless of the polymerization process used, at the end of the polymerization process the residual unreacted monomers are removed under vacuum from the aqueous polymerization phase and dissolved in water. This aqueous stream forms also part of the wastewater.

Additionally the production equipment (reactors, tanks etc.), including the storage tanks of the halogenated vinyl polymer latex, is typically washed at regular intervals. The water used in the washing of the production equipment is also part of the wastewater that can be successfully treated with the inventive process.

The water used as a dispersing agent during the polymerization process, or the water recovered from a latex purification and/or concentration process, as well as the polymer washing waters, when present, monomer stripping water, and the polymerization equipment washing waters are collectively referred to in the present specification as "wastewater".

The wastewater of the method of the present invention can thus be obtained by a process comprising the following steps: A) providing an aqueous polymerization medium comprising a dispersed or emulsified halogenated vinyl polymer; B) separating the halogenated vinyl polymer from the aqueous polymerization medium; C) optionally washing the halogenated vinyl polymer with water; and D) combining the water from the washing step with the aqueous polymerization medium to provide a wastewater.

Alternatively, should the polymer be prepared with an emulsion polymerization process the wastewater of the method of the present invention may be obtained by a process comprising the following steps: A') providing an aqueous polymerization medium comprising a dispersed or emulsified halogenated vinyl polymer; C') purifying and/or concentrating said aqueous polymerization medium comprising a dispersed or emulsified halogenated vinyl polymer obtaining a purified and/or concentrated polymer latex and a wastewater.

Both processes may further comprise the steps of: E) washing the equipment where the polymerization was carried out with water; and F) combining the water from washing step E) with the wastewater obtained in step D or C').

Wastewaters deriving from different halogenated vinyl polymer manufacturing processes may be combined together before being treated according to the inventive process.

In the present specification the expression "halogenated vinyl polymer" is used to refer to a polymer comprising a major proportion, i.e. at least 50 % by weight, of recurring units deriving from at least one halogenated vinyl monomer, wherein the expression "halogenated vinyl monomer" is used to indicate ethylenically unsaturated halogenated monomers which are aliphatic and which have, as sole heteroatom(s), one or more halogen atoms. Notable examples of halogenated vinyl monomers are fluorinated vinyl monomers and chlorinated vinyl monomers.

Among "chlorinated vinyl monomers" mention may be made of chlorinated vinyl monomers for which the number of chlorine atoms is 1, e.g. vinyl chloride; chlorinated vinyl monomers for which the number of chlorine atoms is 2, such as vinylidene chloride; chlorinated vinyl monomers for which the number of chlorine atoms is 3 or more, e.g. trichloroethylene, 1,1,3-trichloropropene and tetrachloroethylene. Preferred chlorinated vinyl monomers are selected from vinyl chloride and vinylidene chloride.

Among "fluorinated vinyl monomers" mention may be made of chlorotrifluoroethylene, trifluoroethylene, vinyl fluoride, vinylidene fluoride, perfluorinated vinyl monomers, such as tetrafluoroethylene and hexafluoropropylene.

Preferably the wastewater derives from the manufacture of chlorinated vinyl monomers, and more preferably from the manufacture of vinylidene chloride polymers.

Suitable vinylidene chloride polymers are polymers comprising at least 45% by weight of recurring units deriving from vinylidene chloride and up 55 % by weight of at least one monomer polymerisable therewith. Among the monomers which can be polymerized with vinylidene chloride mention may be made, without implied limitation, of vinyl chloride, vinyl esters, such as, for example, vinyl acetate, vinyl ethers, acrylic acid, acrylic esters, acrylamide, methacrylic acid, methacrylic esters, methacrylamide, acrylonitrile, methacrylonitrile, styrene, styrene derivatives, butadiene, olefins, such as, for example, ethylene and propylene, itaconic acid and maleic anhydride.

The amount and the nature of the contaminant suspended in the wastewater may vary broadly. In general the amount of contaminant may range from 1 to 200 g of contaminant/kg of wastewater, more typically from 1 to 50 g/kg.

On the other hand, the nature of the contaminant may depend for instance on the nature of the halogenated vinyl polymer, on the nature of radical polymerization initiators and possible chain transfer agents, as well as on the type of polymerization process (suspension or emulsion) employed. Advantageously, the inventive method has been found to be effective regardless of the nature and content of the contaminant suspended in the wastewater.

The wastewater to be treated may have a temperature of from 0 up to 100°C, more typically it has a temperature of from 10 to 85°C. Preferably the wastewater has a temperature from 20 to 80°C, more preferably from 25 to 75°C. Good results have been obtained when the method is carried out by keeping the wastewater at a temperature of from 40 to 65°C.

The pH of the wastewater is not limited to any value although highly acidic conditions should preferably be avoided. The pH of the wastewater to be treated is thus at least 5, more typically at least 6. The pH of the wastewater to be treated typically does not exceed 13.

Addition of the water soluble carbonate and of the water soluble calcium salt to the wastewater may be performed in any manner and using any equipment known in the art. Preferably the addition is carried out under stirring.

The expression "water soluble carbonate" is used herein to denote inorganic carbonate compounds whose solubility in water at 20°C is of at least 5 g/L as well as carbon dioxide. Notable, non-limiting examples of water soluble inorganic carbonate compounds are for instance alkaline metal carbonates, e.g. Li₂CO₃, Na₂CO₃, K₂CO₃, Rb₂CO₃ and Cs₂CO₃.

The amount of the at least one water soluble inorganic carbonate to be added is typically at least 0.5 g/L of wastewater to be treated. The amount of the at least one water soluble inorganic carbonate added to the wastewater typically does not exceed 15 g/L of wastewater, as higher amounts typically would not improve the removal of contaminants from the wastewater.

In a first embodiment of the method the at least one water soluble inorganic carbonate is added to the wastewater as a solid.

In a second embodiment the at least one water soluble inorganic carbonate is added to the wastewater as an aqueous solution.

When the at least one water soluble inorganic carbonate is added as an aqueous solution it is preferred that its concentration in water be as high as possible to avoid increasing the volume of the treated wastewater to handle.

In a preferred embodiment of the method the at least one water soluble carbonate is sodium carbonate.

The amount of sodium carbonate to be added to the wastewater is typically at least 0.5 g/L of wastewater to be treated. Preferably the amount of sodium carbonate is at least 1.0 g/L of wastewater, more preferably at least 1.5 g/L and even more preferably at least 2.0 g/L of wastewater to be treated. The amount of sodium carbonate added to the wastewater typically does not exceed 15 g/L of wastewater, or even 10 g/L of wastewater.

Preferably sodium carbonate is added to the wastewater as an aqueous solution. The concentration of sodium carbonate in the aqueous solution is advantageously at least 100 g/L, more preferably at least 150 g/L. The concentration of sodium carbonate in the aqueous solution may be up to 200 g/L, and even be up to 220 g/L.

In an alternative embodiment of the method of treatment, the water soluble carbonate is carbon dioxide.

Typically carbon dioxide is added to the wastewater as a gas, for instance by bubbling gaseous carbon dioxide in the wastewater. Gaseous carbon dioxide may be pure or diluted.

When the at least one water soluble carbonate is added to the wastewater in the form of gaseous carbon dioxide the pH of the wastewater is typically adjusted to be in the range from 6 to 10, preferably from 6.5 to 10.

After the addition of the at least one water soluble carbonate, the wastewater may optionally be left under stirring for 1 up to 100 minutes, typically for 1 up to 60 minutes, before the addition of the water soluble calcium salt.

The expression "water soluble calcium salt" is used herein to denote inorganic calcium compounds whose solubility in water at 20°C is of at least 5 g/L. Notable, non-limiting examples of water soluble calcium salts are for instance CaCl₂, CaBr₂, Cal₂, Ca(NO₃)₂. Preferable water soluble calcium salts are CaCl₂ and Ca(NO₃)₂.

The amount of calcium salt to be added is determined in terms of amount of calcium per litre of wastewater. Thus, the amount of calcium salt to be added in step a) of the process is at least 1 g of calcium/L of wastewater, preferably at least 2 g/L. The amount of calcium added to the wastewater typically does not exceed 15 g/L of wastewater, or even 10 g/L of wastewater.

In a first embodiment of the method the water soluble calcium salt is added to the wastewater as a solid.

In a second embodiment the calcium salt is added to the wastewater as an aqueous solution.

In general the concentration of the solution will be adjusted to obtain the addition of desired amount of calcium while at the same time minimizing the volume of added solution. Typically the volume of the calcium salt solution will be from 5 to 20% by volume with respect to the volume of the wastewater, preferably from 5 to 15% by volume.

In an advantageous embodiment of the invention both sodium carbonate and the water soluble calcium salt are added to the wastewater as an aqueous solution.

In an embodiment of the inventive method the aqueous solution containing calcium ions may be in the form of a solution comprising milk of lime (calcium hydroxide) in addition to calcium chloride.

After the addition of the water soluble calcium salt the wastewater is typically left under stirring for 1 up to 100 minutes, typically for 1 up to 60 minutes, before allowing the solid precipitate to settle.

Separation of the treated water from the solid precipitate may be carried out according to any technique known in the art, such as filtration and sedimentation.

In an embodiment, the method additionally comprises the step c) of recycling part of the solid precipitate obtained in step b) by adding it to the wastewater to be treated. The recycled solid precipitate may be added to the wastewater either before the sequential addition of the at least one water soluble carbonate and of the at least one water soluble calcium salt or after. Preferably the recycled solid precipitate is added to the wastewater before the sequential addition of the at least one water soluble carbonate and of the at least one water soluble calcium salt, thus before step a) of the inventive method.

The optimal amount of recycled solid precipitate to be added to the wastewater may be determined by routine experiments.

After separation of the solid precipitate the treated wastewater can be discharged into the sewage system.

The solid precipitate is optionally dried and disposed of according to standard practices.

The invention will be now described in more detail with reference to the following examples, whose purpose is merely illustrative and not intended to limit the scope of the invention.

EXAMPLES

MATERIALS

E1: wastewater from vinylidene chloride manufacture treated with NaOH pH=12.6; Density of Suspended Matter initially present in wastewater (DSMᵢ) = 12 g/kg;

E2: wastewater from vinylidene chloride manufacture pH=7.1; DSMᵢ = 2.7 g/kg

E3: wastewater obtained by mixing E1 and E2 in a 1:3.5 v/v ratio; pH= 12.3

E4: wastewater from vinylidene chloride manufacture treated with NaOH having a Chemical Oxygen Demand (COD) of 904 mg/L

E5: wastewater from vinylidene chloride manufacture treated with NaOH having a Chemical Oxygen Demand (COD) of 469 mg/L

C1: aqueous solution containing milk of lime and CaCl₂ (23.4 g/kg of calcium/L of solution, 10 g/kg of which from CaCl₂); pH 11.4

METHODS

**Density of Suspended Matter (DSMi):** The values of DSMᵢ in the wastewater before treatment were determined following the general procedure described in ASTM method D5907-10 but using a drying temperature of the solid of 60°C instead of 105°C.

**Density of Solid Precipitate (DSP):** is the mass percentage of solid matter in the solid precipitate after settling has taken place and before filtration. A higher value of DSP indicates a higher efficiency in promoting the formation of a compact solid precipitate.

EXAMPLE 1 - GENERAL PROCEDURE

To 450 mL (500 mL when E1 is used) of wastewater placed in a becker provided with agitation were added under stirring 10 mL of a sodium carbonate solution having a concentration of 198 g/L (corresponding to 4.4 g of Na₂CO₃/L of wastewater). The wastewater was stirred for 1 minute before addition of 17 mL of a calcium nitrate solution having a concentration of calcium of 73.8 g/L (corresponding to 2.8 g/L of wastewater).

Stirring was stopped after 5 minutes and the speed of settling of the precipitate determined by measuring the height of the precipitate as a function of time.

The effectiveness of the treatment to promote formation of a solid precipitate was measured in terms of DSP as well as speed of settling of the precipitate.

The ratio (v/v) of the volume of the settled precipitate with respect to the initial volume of the wastewater to treat, reported in Table 1 as "Final settling of precipitate", gives an indication of the ability of the treatment of providing a lower volume of solid precipitate at the end of the process. A lower value of this ratio indicates a higher efficiency in promoting the formation of a compact solid precipitate.

On the whole an efficient method of treatment is characterised by a high settling speed and/or a low volume of the precipitate after settling (or higher DSP).

The ease of separation by filtration (both under vacuum and under a 3 bar pressure) was determined by measuring the resistance of the solid precipitate to filtration. A lower resistance to filtration is advantageous from a process point of view. The results are shown in Table 1.

**Table 1**

| | E1 | COMP. EX1 | E2 | E3 | | |
|---|---|---|---|---|---|---|
| Temperature | RT | RT | RT | RT | RT | 40°C |
| Stirring speed (rpm) | 200 | 200 | 200 | 200 | 300 | 300 |
| Settling speed (m/h) | 1.5 | 2 | 2.4 | 1.3 | 5 | >5 |
| Final settling of precipitate (v/v) | 6% | 30% | - | - | - | - |
| DSP | 10% | 2% | - | 11% | 14% | 8.5% |
| Filtration resistance (vac) (m/kg) | 2x10¹¹ | 9x10¹¹ | - | - | 7x10¹¹ | - |
| Filtration resistance (pressure) (m/kg) | 3x10¹² | 5x10¹² | - | - | - | - |

COMPARATIVE EXAMPLE 1

To 450 mL (500 mL when E1 is used) of wastewater placed in a becker provided with agitation were added under stirring 20 mL of a calcium nitrate solution having a concentration of calcium of 73.8 g/L (corresponding to 2.8 g/L of wastewater). The wastewater was stirred for 1 minute before addition of 2 mg of a polyacrylamide flocculant (Magnafloc 351 supplied by Ciba).

Stirring was stopped after 5 minutes and the speed of settling of the precipitate determined by measuring the height of the precipitate as a function of time.

The ease of separation by filtration (both under vacuum and under a 3 bar pressure) was determined by measuring the resistance of the solid precipitate to filtration. The results are shown in Table 1.

The data from Example 1 and Comparative Example 1 show that the method according to the invention provides a better balance than the prior art method between settling speed of the precipitate, volume of the precipitate and ease of filtration of the wastewater. The last parameter being important for the selection and operation of an industrial scale process.

EXAMPLE 2

Following the general procedure described in Example 1 the effectiveness of the method as a function of the amount of organic matter contained in the wastewater was tested. As a source of water soluble calcium salt an aqueous solution C1 comprising milk of lime (calcium hydroxide) and calcium chloride in an amount of 2.8 g Ca/L of wastewater. Stirring speed was set at 300 rpm. Stirring was stopped after 5 minutes and the speed of settling of the precipitate determined by measuring the height of the precipitate as a function of time.

The effectiveness of the treatment to promote formation of a solid precipitate was measured in terms of settling speed as well as in terms of density of the settled solid precipitate.

The ease of separation by filtration was determined by measuring the resistance of the solid precipitate to filtration. No major difference was measured between filtration under vacuum and under a 3 bar pressure. The results are shown in Table 2.

**Table 2**

| | E4 | E5 |
|---|---|---|
| COD (mg/L) | 904 | 469 |
| Settling speed (m/h) | 11 | 4 |
| Final settling of precipitate (v/v) | 10% | 12% |
| Filtration resistance (m/kg) | 9x10¹⁰ | 9x10¹⁰ |
| Residual solid in clear liquid after settling (mg/kg) | 22 | 20 |

As can be seen from the data in Table 2 the method provides satisfactory results independently of the initial amount of organic matter suspended in the wastewater.

EXAMPLE 3

To 450 mL of wastewater E4 placed in a becker provided with agitation (300 rpm) carbon dioxide was added by bubbling gaseous carbon dioxide (100%). While bubbling of carbon dioxide continued an aqueous solution C1 comprising milk of lime (calcium hydroxide) and calcium chloride in an amount of 2.8 g Ca/L of wastewater was added. The wastewater was stirred under constant addition of carbon dioxide until pH of the wastewater reached 6.6. Then stirring was stopped and the speed of settling of the precipitate determined by measuring the height of the precipitate as a function of time. The results are shown in Table 3.

**Table 3**

| | |
|---|---|
| Settling speed (m/h) | 4 |
| Final settling of precipitate (v/v) | 9% |
| Residual solid in clear liquid after settling (mg/kg) | 22 |

The method thus provides high settling speed, a low volume of precipitate and a low amount of residual solids in the clear liquid even when carbon dioxide is used as the water soluble carbonate.

## Claims

1. A method for the treatment of a wastewater deriving from the manufacture of halogenated vinyl polymers, said method comprising the steps of: a) sequentially adding to said wastewater at least one water soluble carbonate and at least one water soluble calcium salt to form a solid precipitate; and b) separating said solid precipitate from the treated wastewater.

2. Method according to claim 1 wherein the at least one water soluble carbonate is selected from the group consisting of inorganic carbonate compounds having a solubility in water at 20°C of at least 5 g/L.

3. Method according to claim 2 wherein the at least one water soluble inorganic carbonate is added in an amount of at least 0.5 g per litre of wastewater to be treated.

4. Method according to claim 2 or 3 wherein the at least one water soluble inorganic carbonate is added to the wastewater as a solution in water.

5. Method according to any preceding claim wherein the at least one water soluble carbonate is sodium carbonate.

6. Method according to claim 5 wherein sodium carbonate is added as a solution in water and said solution has a concentration of sodium carbonate of at least 100 g/L of wastewater.

7. Method according to claim 1 wherein the at least one water soluble carbonate is carbon dioxide.

8. Method according to any preceding claims wherein the water soluble calcium salt is selected from inorganic calcium compounds whose solubility in water at 20°C is of at least 5 g/L.

9. Method according to any preceding claim wherein the water soluble calcium salt is added in an amount of at least 1 g of calcium per litre of wastewater to be treated.

10. Method according to any preceding claim wherein said soluble calcium salt is added as a solution in water.

11. Method according to any preceding claim comprising the step of: c) adding a portion of the solid precipitate isolated in step b) to the wastewater.

12. Method according to claim 10 wherein step c) is carried out before step a).

13. Method according to any preceding claim wherein the halogenated vinyl polymer is selected from the group consisting of chlorinated vinyl polymers and fluorinated vinyl polymers.

14. Method according to any preceding claim wherein the halogenated vinyl polymer is a vinylidene chloride polymer.
